# EUROPÄISCHE PATENTSCHRIFT

(11) **EP 3 528 975 B1**
(45) Veröffentlichungstag und Bekanntmachung des Hinweises auf die Patenterteilung: **25.11.2020**
(21) Anmeldenummer: 17811828.7
(22) Anmeldetag: 19.10.2017
(51) Int. Cl.: B21D 5/02, B21D 37/04, B21D 37/14

(54) **VORRICHTUNG ZUM POSITIONIEREN EINES BIEGEWERKZEUGES**
FEEDING METHOD FOR A MACHINE TOOL
PROCÉDÉ DE CHARGEMENT POUR UNE MACHINE-OUTIL

(30) Priorität: 20.10.2016 AT 509602016
(43) Veröffentlichungstag der Anmeldung: 28.08.2019
(73) Patentinhaber: TRUMPF Maschinen Austria GmbH & Co. KG., 4061 Pasching (AT)
(72) Erfinder: TIRAFERRI, Matteo, 10040 San Gillio (TO) (IT); TONDA ROCH, Andrea, 10141 Torino (IT); VIDOTTO, Giovanni, 10023 Chieri (TO) (IT)
(74) Vertreter: Burger, Hannes
(86) Internationale Anmeldenummer: PCT/AT2017/060278
(87) Internationale Veröffentlichungsnummer: WO 2018/071946

(56) Entgegenhaltungen:
- EP-A1- 1 479 461
- EP-A1- 2 946 846
- WO-A1-01/08174
- WO-A2-99/35656
- DE-A1- 3 212 465
- DE-B3-102011 052 173
- FR-A1- 2 791 590
- JP-A- 2003 117 607

## Beschreibung

Diese Erfindung betrifft ein Verfahren zum Positionieren eines Biegewerkzeuges mittels eines entlang einer Magnetführung verschiebbaren Elektromagneten, welches Biegewerkzeug an einer Werkzeugaufnahme von einem entlang einer Halteschlittenführung verschiebbaren Halteschlitten gehalten wird und welches Biegewerkzeug eine Magnetenaufnahme aus einem magnetisierbaren Werkstoff umfasst, wobei zwischen dem Elektromagneten und der Magnetenaufnahme eine Magnetkraft wirkt.

Werkzeugmaschinen zum Biegen von Werkstücken weisen zumeist einen Maschinenrahmen auf, an welchem Biegewerkzeuge angeordnet sind, die eine Bearbeitungskraft auf ein Werkstück zur Umformung des Werkstückes aufbringen können. Um eine werkstückangepasste Krafteinwirkung zu ermöglichen, weisen die Werkzeugmaschinen zumeist Werkzeugaufnahmen auf, an welchen Werkzeugaufnahmen spezifisch ausgebildete Biegewerkzeuge anordenbar sind. Zur Durchführung der einzelnen Bearbeitungsschritte am Werkstück ist es erforderlich, die Werkzeuge zu tauschen oder hinsichtlich ihrer Position zu verändern. Dazu wird zumeist die die Biegewerkzeuge haltende Werkzeugaufnahme entriegelt, sodass die darin angeordneten Biegewerkzeuge manipulierbar werden. Beispielsweise ist bei einer Biegemaschine die Werkzeugaufnahme geradlinig ausgebildet und erstreckt sich über die gesamte Länge des Pressbalkens.

Im Fall einer manuellen Umkonfiguration des Werkzeuges muss vom Maschinenbediener das Biegewerkzeug gefasst und aus der Werkzeugaufnahme entnommen oder in der Werkzeugaufnahme verschoben werden. Dies ist bei kleinen Biegewerkzeugen für die Bearbeitung leichter Werkstoffe, wie beispielsweise dünner Bleche, einfach möglich, während bei Werkzeugen für die Bearbeitung von schweren Bauteilen dies eine beträchtliche Kraftanstrengung erfordert oder dies manuell nicht mehr möglich ist.

Nach dem Stand der Technik sind Systeme und Vorrichtungen bekannt, bei denen Werkzeuge, im Weiteren werden darunter Biegewerkzeuge verstanden, mittels eines Greifers an einem Ort der Maschine aufgenommen, von diesem Ort entnommen und sohin transferiert werden. Dies erfordert jedoch einen Manipulationsroboter, der in einem Bereich der Maschine Manipulationshandlungen durchführt. Es sollte hierbei sichergestellt werden, dass keine Personen durch die Manipulationshandlungen gefährdet werden.

Es ist weiters bekannt, eine Gruppe von eingelegten Werkzeugen mittels einer Ausschubvorrichtung von der Werkzeugaufnahme auf eine in Längserstreckung des Pressbalkens seitlich angeordnete Aufnahmevorrichtung auszuschieben, wonach diese Aufnahmevorrichtung in eine Parkposition bzw. in einen Werkzeugspeicher bewegt wird.

Derartige Systeme zeichnen sich jedoch meist durch eine große Komplexität aus und erfordern meist größere Um- beziehungsweise Anbauten an der Maschine.

Weiters sind nach dem Stand der Technik Wechselvorrichtungen bekannt, bei welchen die verwendeten Biegewerkzeuge zumeist aus Metall sind und somit durch einen Magneten gehalten werden können. Dazu wird ein Halteschlitten an die Werkzeugaufnahme des Biegewerkzeuges herangeführt, um mittels eines im Halteschlitten angeordneten Haltemagneten das Werkzeug aufzunehmen und das Biegewerkzeug entlang der Werkzeugaufnahme abzuziehen und die Position des Werkzeuges zu verändern. Bei Erreichen einer Endposition wird die magnetische Magnetkraft aufgehoben, wodurch sich das Biegewerkzeug und der Halteschlitten voneinander lösen. Nachteilig dabei ist jedoch, dass zufolge des einwirkenden Magnetfeldes in einem metallischen Gegenstand, insbesondere im Biegewerkzeug und auch im Wechselschlitten, ein Restmagnetismus aufgebaut wird. Dies kann dazu führen, dass der Haltemagnet und das Biegewerkzeug aneinander haften bleiben oder sich nur durch weitere Maßnahmen voneinander trennen lassen. Ferner können sich metallische Ablagerungen, wie sie bei der Bearbeitung von metallischen Werkstücken anfallen können, an den Werkzeugen und am Wechselschlitten anlagern.

Es besteht weiters das Problem, dass die magnetisierten Biegewerkzeuge und/oder einen Restmagnetismus aufweisenden Biegewerkzeuge sowie der magnetisierte Haltemagnet und/oder der einen Restmagnetismus aufweisende Haltemagnet ein zu bearbeitendes magnetisierbares Werkstück wie beispielsweise ein leichtes Blech anziehen. Hierdurch kann das magnetisierbare Werkstück aufgenommen werden oder zumindest die Ausrichtung des Werkstückes in Relation zur Werkzeugmaschine geändert werden. Dies kann eine fehlerhafte Bearbeitung des Werkstückes wegen einer unrichtigen Positionierung des Werkstückes bewirken.

EP2946846, welches Dokument ein Basis für den Oberbegriff des Anspruchs 1 ist, offenbart eine Werkzeugwechselvorrichtung für eine Umformpresse mit einem Werkzeugmagazin und einer Übertragungsvorrichtung zur Übertragung der Umformwerkzeuge vom Werkzeugmagazin zur Umformpresse, wobei die eine Übertragungsvorrichtung eine antreibbare Schubkette umfasst. Die Übertragungsvorrichtung umfasst weiters einen Elektromagneten zur Aufnahme des Umformwerkzeuges.

Die FR2791590A1 offenbart eine Haltevorrichtung für Form- bzw. Biegewerkzeuge und einen entsprechenden Werkzeughalter, wobei die Werkzeuge mittels eines Permanent- oder Elektromagneten in einer vorgebbaren Position gehalten werden können. Die Magneten wirken als "magnetischer Saugnapf" und sind zwischen einem Formwerkzeug und dem Werkzeughalter angeordnet. Die Funktion dieser Magnete dient der Verbesserung beim manuellen Einführen des Formwerkzeugs in den Werkzeughalter da eine Referenzposition in Vertikalrichtung durch die magnetische Anziehung zum Werkzeughalter im Wesentlichen von selber eingenommen wird.

DE3212465 offenbart eine Transportvorrichtung mit mindestens einem Haftmagneten, in welcher Transportvorrichtung Sensoreinheiten in Form von Induktionsspulen zwischen den Schenkeln beziehungsweise um die Schenkel herum symmetrisch in Bezug auf das Zentrum des Haftmagneten angeordnet sind. Mit Hilfe dieser Sensoreinrichtung ist es möglich, die Richtung der Annäherung des Haftmagneten gegenüber einem Werkstück festzustellen und die durch die Sensoreinrichtung feststellbare Magnetfeldänderung für Steuerzwecke zu benutzen. DE3212465 offenbart die Entmagnetisierung des Magneten und die Anpassung der Signalstärke des Magneten an das aufzunehmende Werkstück.

US5595560 offenbart eine Biegepresse mitsamt einer Beschickungsstation. Es wird das Auslesen von Codes beschrieben, welche Codes mit Daten über das aufzunehmende Werkstück verlinkt sind.

Die Aufgabe der Erfindung liegt nun darin, ein Verfahren bereitzustellen, welches die exakte und rasche Positionierung magnetisierbarer Biegewerkzeuge in einer Werkzeugmaschine ermöglicht.

Diese Aufgabe wird durch ein Verfahren gemäß dem Anspruch 1 gelöst. Erfindungsgemäß wird dies dadurch gelöst, dass der Elektromagnet und die Magnetenaufnahme ineinander positionierbare, kongruente, polygonale Formen aufweisen.

Die zwischen dem Elektromagneten und der Magnetaufnahme wirkenden Magnetkräfte werden unter anderem durch die Feldstärke des Magneten und durch die Größe der Kontaktflächen des Elektromagneten und der Magnetenaufnahme definiert. Durch die Ausbildung der Oberfläche des Elektromagneten und der Oberfläche der Magnetenaufnahme als ineinandergreifende, kongruente, polygonale Formen wird die zwischen Elektromagnet und Magnetenaufnahme wirkende Kontaktfläche erhöht. Die erfindungsgemäße Vorrichtung zeichnet sich sohin dadurch aus, dass die Magnetkraft rein durch die Form des Elektromagneten und der Magnetenaufnahme erhöht beziehungsweise maximiert wird. Dies hat wiederum den Effekt, dass die durch eine Beaufschlagung des Elektromagneten mittels einer Spannung erzeugbare Magnetfeldstärke unter Aufrechterhaltung der erforderlichen Magnetkraft geringer wählbar ist, wodurch wiederum der Einfluss des eingesetzten Magnetismus auf die Biegemaschine reduziert werden kann.

Der Elektromagnet und die Magnetenaufnahme können als ein Hohlkörper beziehungsweise ein in den Hohlkörper einbringbarer Körper ausgeführt sein.

Der Elektromagnet kann beispielsweise in Teilbereichen eine sternförmige Form aufweisen. Die Magnetenaufnahme weist in diesem Fall in diesen Teilbereichen eine zu der sternförmigen Form des Elektromagneten kongruente Form auf.

Im umgekehrten Sinn kann die Magnetenaufnahme eine sternförmige Form aufweisen und der Elektromagnet eine zu der sternförmigen Form der Magnetenform kongruente Form aufweisen.

Die Kontaktflächen des Elektromagneten und der Magnetaufnahme können beabstandet sein. Bei einer halbtechnischen Anlage, welche einen Elektromagneten mit einem sternförmigen Querschnitt und eine Magnetenaufnahme mit einer kongruenten Negativform umfasste, ist die innere Kontaktfläche 563,0mm² und die äußere Kontaktfläche 1223,0mm² groß.

Die Magnetenaufnahme kann einen weiteren Elektromagneten umfassen, welcher den magnetisierbaren Werkstoff, aus welchem die Magnetenaufnahme ausgebildet ist, magnetisieren kann.

Das Verfahren bietet eine Lösung zur der technischen Aufgabe, den Einfluss des zum Positionieren des Biegewerkzeuges entlang der Halteschlittenführung eingesetzten Elektromagneten und des durch den Elektromagneten erzeugten Magnetismus auf die Biegemaschine und deren Komponenten so gering wie möglich zu halten.

Die im Rahmen dieser Erfindung offenbarte technische Lösung sieht vor, dass die zwischen dem Elektromagneten und der Magnetenaufnahme wirkende Magnetkraft in Abhängigkeit der oben genannten Einflussfaktoren gewählt wird. Diese Anpassung ist weiters von dem Leitgedanken geprägt, die Magnetkraft beziehungsweise die Nominalkraft so gering zu wählen, dass die Nominalkraft als Magnetkraft und das damit verbundene Magnetfeld möglichst keine Störungen verursachen.

Die zwischen dem Elektromagneten und der Magnetenaufnahme wirkende Magnetkraft kann eine Anziehungskraft oder eine Abstoßungskraft sein.

Bei Wirkung der Magnetkraft als eine Abstoßungskraft wird das Biegewerkzeug durch den verschiebbaren Elektromagneten geschoben, wobei die Magnetenaufnahme in Abhängigkeit von der Größe der Magnetkraft stets beabstandet ist. Vor dem Erreichen der gewünschten Position des Biegewerkzeuges in der Biegemaschine ist das Schieben des Biegewerkzeuges durch den Elektromagneten einzustellen, sodass das Biegewerkzeug auslaufen kann. Gegebenenfalls ist das Biegewerkzeug zu bremsen.

Bei Wirkung der Magnetkraft als Anziehungskraft zwischen dem Elektromagneten und der Magnetenaufnahme ist das Biegewerkzeug mit dem Elektromagneten gekoppelt.

Zum Erreichen der Nominalkraft wird der erste Elektromagnet, im Genaueren die Spule des ersten Elektromagneten mit der nominellen Spannung beaufschlagt. Bei einem 12V Elektromagneten ist beispielsweise die nominelle Spannung 12V.

Die erforderliche Magnetkraft wird unter anderem durch das Eigengewicht des Biegewerkzeuges bestimmt. Diese Eigengewichte variieren bei einer Testanlage zwischen einigen hundert Gramm und 25 Kilogramm. Ein Eigengewicht eines Werkzeuges ist messbar oder dem Fachmann als bekannt oder als bestimmbar anzusehen.

Das Biegewerkzeug wird beim Positionieren in der Biegemaschine positiv und negativ beschleunigt, wobei das Biegewerkzeug durch den bewegten Elektromagneten gezogen oder geschoben werden kann. Um ein Loslösen oder allgemein ein Entkoppeln des Biegewerkzeuges, insbesondere der Magnetenaufnahme vom Elektromagneten zu unterbinden, sind insbesondere bei schweren Biegewerkzeugen die Trägheitskräfte zu berücksichtigen. Dies schließt auch mit ein, dass die Nominalspannung während des (negativen oder positiven) Beschleunigens des Biegewerkzeuges zur Erzeugung der erforderlichen Magnetkraft temporär erhöht oder reduziert werden kann.

Die zwischen der Werkzeugaufnahme und dem Halteschlitten wirkende Reibungskraft kann der auf die Biegemaschine wirkenden Trägheitskraft entgegenwirken oder in eine im Wesentlichen gleiche Richtung wie diese wirken. Der Fachmann kann die Reibungskraft im Wesentlichen aus dem Eigengewicht des Biegewerkzeuges und einem anzusetzenden Reibbeiwert ermitteln. Gegebenenfalls ist zwischen einer Haftreibung und einer Gleitreibung zu unterscheiden.

Die Bewegungsrichtung des Halteschlittens und sohin des Biegewerkzeuges wird durch die Halteschlittenführung vorgegeben. Die während des Positionierens des Biegewerkzeuges stattfindende Bewegung des Biegewerkzeuges muss keinesfalls stets geradlinig erfolgen; das Biegewerkzeug kann auch in einer bogenförmigen Bewegung in die gewünschte Position gebracht werden.

Die Bewegung von Biegewerkzeug und Elektromagneten entlang einer polygonalen Bewegungsbahn hat eine Relativverschiebung von Elektromagnet und Magnetenaufnahme zur Folge, wodurch es auch zu einer Änderung der Orientierung der Magnetkraft in Bezug auf die Bewegungsrichtung kommt. Dies kann erfordern, dass die Magnetkraft erhöht werden muss.

Die oben angeführten Einflussfaktoren sind als vektorielle Größen darstellbar. Der Fachmann erhält die erforderliche Magnetkraft durch Summenbildung dieser vektoriellen Größen unter Erfüllung einer Gleichgewichtsbedingung unter Anwendung der gängigen Lehre. Gegebenenfalls multipliziert der Fachmann die Summenbildung der vektoriellen Größen mit einem Sicherheitsfaktor.

Zusammenfassend gilt, dass die Summe der auf die Kontaktflächen wirkenden Kräfte kleinergleich der Magnetkraft sein muss.

Eine Aufnahme des Werkzeuges an dem Halteschlitten mittels des Haltemagneten hat den Vorteil, dass keine Aufnahme über eine mechanische Koppelung erfolgt. Eine Werkzeugaufnahme, welche nach dem erfindungsgemäßen Verfahren durch den Haltemagneten angezogen wird, muss auch nach mehrfacher Verwendung nicht nachgearbeitet werden.

Es wird weiters die Erstreckung des Magnetfeldes des Elektromagneten in Bereiche mit weiteren magnetisierbaren Werkstücken wie beispielsweise des mit Hilfe des Biegewerkzeuges zu bearbeitenden Werkstückes berücksichtigt. Ist der Elektromagnet hinreichend weit von den weiteren Werkstücken entfernt, sodass das durch den Elektromagneten geschaffene Magnetfeld sich nicht in Bereiche von weiteren Werkstücken erstreckt, so kann eine Reduktion der Nominalkraft auf die minimale erforderliche Magnetkraft entfallen.

Der Fachmann kann eine hinreichende weite Entfernung des Magnetfeldes oder eine hinreichend geringe Feldstärke des Magnetfeldes zum Anziehen eines weiteren magnetisierbaren Werkstückes unter Anwendung der gängigen Lehre berechnen, zumal bei einer Anziehung eines weiteren magnetisierbaren Werkstückes Rückhaltekräfte überwunden werden müssen. Diese Rückhaltekräfte können die Eigengewichte der weiteren magnetisierbaren Werkstücke sein.

Der Fachmann kann sich statistischer Werte bedienen, um ein maximal zu erwartendes Eigengewicht eines weiteren magnetisierbaren Werkstückes zu definieren.

Das erfindungsgemäße Verfahren kann Routinen umfassen, mittels welchen eine Antriebskraft, welche zur Bewegung des Halteschlittens gegebenenfalls mitsamt dem Werkzeug notwendig ist, gemessen wird. Eine Veränderung der Antriebskraft oder der erforderlichen Antriebsleistung oder der Zugkraft kann ein Hinweis darauf sein, dass ein weiteres magnetisierbares Werkstück vom Elektromagneten aufgenommen wurde. Weiters kann eine Abweichung der Antriebskraft und/oder der Antriebsleistung von Referenzwerten einen solchen Hinweis geben.

Das erfindungsgemäße Verfahren kann weiters Routinen zur laufenden Messung der auf Elektromagneten wirkenden Kräfte umfassen. Ein sprunghafter Anstieg der auf dem Elektromagneten wirkenden Kräfte, insbesondere der Gewichtskräfte kann ein Hinweis darauf sein, dass ein weiteres magnetisierbares Werkstück vom Magneten angezogen wurde.

Zur einfacheren Messung einer Veränderung der Antriebskraft und/oder der erforderlichen Arbeitsleistung können Teilstrecken der Strecke, entlang welcher der Halteschlitten mittels der Führung bewegbar ist, definiert werden, in welchen Teilstecken äußere Einflüsse wie beispielsweise eine Verschmutzung durch geeignete Maßnahmen nach dem Stand der Technik unterbunden werden.

Das erfindungsgemäße Verfahren kann sich dadurch auszeichnen, dass die Nominalkraft stufenweise erhöht oder reduziert wird.

Bei einer halbtechnischen Anlage sind sieben Stufen 1 bis 7 vorgesehen, wobei die Stufe 4 den Fall betrifft, dass die Magnetkraft der Nominalkraft entspricht. Die Stufen 1 bis 3 betreffen eine reduzierte Nominalkraft und die Stufen 5 bis 7 eine erhöhte Nominalkraft.

Das Einführen von Stufen kann den Vorteil haben, dass Gruppen von Werkzeugen einer gewissen Stufe zugewiesen werden.

Das erfindungsgemäße Verfahren kann weiters umfassen, dass das Werkzeuggewicht und/oder die Exzentrizität mittels Messvorrichtungen gemessen werden und/oder aus einer Datenbank abgerufen wird und die Magnetkraft in Abhängigkeit der Exzentrizität gewählt wird.

Ein zu der Halteschlittenführung exzentrischer Schwerpunkt des Biegewerkzeuges beeinflusst die in der Halteschlittenführung wirkenden Kräfte und dadurch die in der Halteschlittenführung wirkende Reibung.

Das erfindungsgemäße Verfahren kann sich dadurch auszeichnen, dass die Nominalkraft in Abhängigkeit der Position des Halteschlittens und/oder des zeitlichen Verlaufes erhöht oder reduziert wird.

Durchfährt der Elektromagnet beispielsweise einen zu weiteren magnetisierbaren Werkstücken benachbarten Bereich, so kann die Magnetkraft beispielsweise bei einer konstanten Geschwindigkeit reduziert werden, da einerseits keine Trägheitskräfte zufolge einer Beschleunigung auftreten und andererseits hierdurch ein Anziehen der weiteren Werkstücke vermieden werden kann, falls sich das Magnetfeld zu den weiteren Werkstücken erstreckt.

Das Biegewerkzeug kann im Rahmen des erfindungsgemäßen Verfahrens zumindest teilweise entmagnetisiert werden.

Durch die Entmagnetisierung des Biegewerkzeuges wird unterbunden, dass eine im Biegewerkzeug verbleibende Restmagnetisierung weitere magnetisierbare Werkstücke aufnimmt oder die Position des mit dem Werkzeug zu bearbeitenden Werkstücks durch das Restmagnetfeld verändert wird.

Das Werkzeug kann in Abhängigkeit der temporären Position des Haltschlittens beziehungsweise des Werkzeuges teilweise entmagnetisiert werden.

Die hier offenbarte Erfindung ist keinesfalls auf die Entmagnetisierung des Biegewerkzeuges im Stillstand und/oder in einer Position wie dem Verweilen des Biegewerkzeuges in einem Werkzeuglager oder in einer in die Biegemaschine eingebrachten Stellung beschränkt. Die Entmagnetisierung kann bereits vor dem Eintreffen des bewegten Werkzeuges in den Positionen begonnen werden, um Stehzeiten einer Biegemaschine zu vermeiden. Die Entmagnetisierung während des Positionierens des Biegewerkzeuges hat stets unter Aufrechterhaltung der erforderlichen Magnetkraft zu erfolgen.

Das Biegewerkzeug kann vor und/oder während und/oder nach der Positionierung des Biegewerkzeuges zumindest teilweise entmagnetisiert werden.

Die Entmagnetisierungsparameter können in Abhängigkeit der Bewegung des Biegewerkzeuges und/oder der Bewegungsgeschwindigkeit des Werkzeuges gewählt werden.

Die Entmagnetisierungsparameter können aus einer Datenbank geladen werden.

Die Erfindung wird anhand der nachstehenden Figuren und der nachfolgenden Figurenbeschreibung näher beschrieben, wobei die Figuren und die Figurenbeschreibung lediglich mögliche Ausführungsformen betreffen, welche keinesfalls den durch die Ansprüche definierten Schutzgegenstand einschränken. Der Fachmann ist in der Lage die Figuren und die betreffenden Teile der Figurenbeschreibung mit dem oben angeführten allgemeinen Beschreibungstext zu kombinieren.

In den Figuren sind die nachstehenden Elemente durch die vorangestellten Bezugszeichen gekennzeichnet:
1 Biegewerkzeug
2 Elektromagnet
3 Halteschlitten
4 Werkzeugaufnahme
5 Magnetenaufnahme
6 Biegeform
7 Kontaktfläche
8 Magnetführung
9 Bewegungsrichtung
10 Halteschlittenführung
11 Spalte Einschaltdauer
12 Arbeitszyklus
13 erste Zeitspanne
14 zweite Zeitspanne

Figur 1 zeigt eine Seitenansicht von Elektromagnet und Biegewerkzeug.
Figur 2 und Figur 3 zeigen Schnittansichten des Elektromagneten und des Biegewerkzeuges. Figur 4 zeigt eine Schnittansicht des Biegewerkzeuges und des Halteschlittens.
Figur 5 umfasst eine Tabelle.
Figur 6 veranschaulicht eine periodische Belastung des Elektromagneten zur Unterbindung einer Überhitzung.

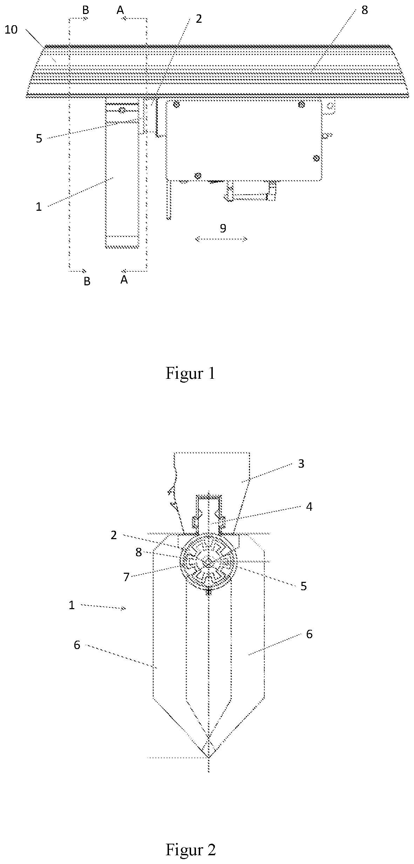

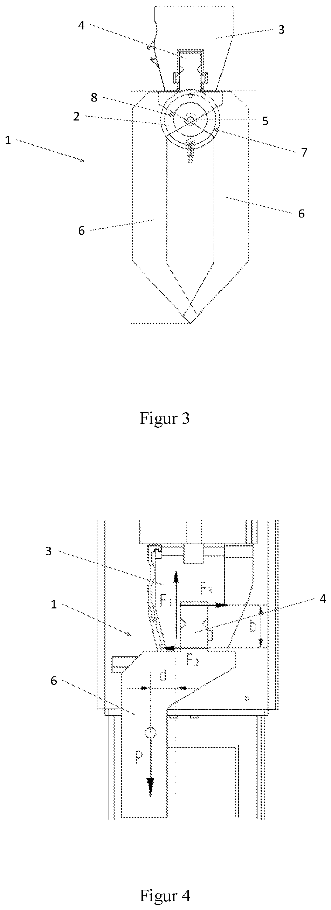

Figur 1 zeigt eine Seitenansicht der erfindungsgemäßen Vorrichtung, wobei die Position der in Figur 1 und Figur 2 gezeigten Schnittansichten durch die Linie A-A in Figur 1 eingetragen ist. Weiters zeigt die Linie B-B die Position der in Figur 4 gezeigten Schnittansicht.

Figur 1 zeigt eine Ausführungsform der erfindungsgemäßen Vorrichtung zum Positionieren des Biegewerkzeuges 1 mittels eines entlang einer Magnetführung 8 verschiebbaren Elektromagneten 2. Das Biegewerkzeug 1 umfasste eine in Figur 1 nicht ersichtliche Werkzeugaufnahme 4, über welche Werkzeugaufnahme 4 das Biegewerkzeug 1 durch einen in Figur 1 nicht ersichtlichen Halteschlitten 3 über eine lösbare mechanische Verbindung gehalten wird. Der Halteschlitten 1 ist entlang einer Halteschlittenführung 10 in eine Bewegungsrichtung 9 verschiebbar gelagert.

Die Halteschlittenführung 10 und die Magnetführung 8 sind bei der in Figur 1 dargestellten Ausführungsform einstückig ausgebildet. Der Elektromagnet 2 und der Halteschlitten 3 sind sohin in parallele Bewegungsrichtungen 9 verschiebbar.

Das Biegewerkzeug 1 umfasst eine Magnetenaufnahme 5 aus einem magnetisierbaren Werkstoff, wobei zwischen dem Elektromagneten 2 und der Magnetenaufnahme 5 bei einer Beaufschlagung des Elektromagneten mit einer Spannung eine Magnetkraft wirkt.

Figur 2 zeigt eine Schnittansicht des Elektromagneten 2 und des Biegewerkzeuges 1 als Teile einer Ausführungsform der erfindungsgemäßen Vorrichtung zum Positionieren eines Biegewerkzeuges 1 in einer in Figur 2 nicht dargestellten Biegemaschine.

Das Biegewerkzeug 1 umfasst Biegeformen 6, welche zum Umformen eines in Figur 2 nicht dargestellten Werkstückes auf dieses gepresst werden. Die Biegeformen 6 bestimmen unter anderem die Form des gebogenen Werkstückes.

Das Biegewerkzeug 1 wird an einer Werkzeugaufnahme 4 an einem Halteschlitten 3 gehalten. Das Halten des Biegewerkzeuges 1 erfolgt über eine lösbare mechanische Verbindung, wobei die Art der Ausbildung dieser mechanischen Verbindung keinen Einfluss auf die erfindungsgemäße Vorrichtung hat.

Der Halteschlitten 3 ist entlang einer in Figur 2 nicht dargestellten Halteschlittenführung normal zu der Bildebene verschiebbar.

Die Positionierung des Biegewerkzeuges 1 in Richtung normal zu der Bildebene der Figur 2 erfolgt durch ein Verschieben des Elektromagneten 2 in Richtung normal zu der Bildebene der Figur 2, wobei sich zwischen dem Elektromagneten 2 und der Magnetenaufnahme 5 eine Magnetkraft einstellt. Die Magnetenaufnahme 5 ist hierzu aus einem magnetisierbaren Werkstoff hergestellt.

Der Elektromagnet 2 ist als Hohlkörper ausgebildet, wobei die Magnetenaufnahme 5 in den inneren Bereich des Hohlkörpers 2 eingebracht wird. Der Elektromagnet 2 und die Magnetenaufnahme 5 weisen - wie im Schnittbild Figur 2 ersichtlich - kongruente, polygonale Formen auf.

Im Besonderen weist die Magnetenaufnahme 5 eine sternförmige Querschnittsform auf. Der Elektromagnet 2 weist im Querschnitt eine hierzu kongruente Negativform auf.

Die Kontaktfläche 7 des Elektromagneten 2 und die Kontaktfläche 8 der Magnetenaufnahme 5 sind voneinander beabstandet. Demzufolge sind die Kontaktflächen 7, 8 unterschiedlich groß.

Die erfindungsgemäße Ausformung von Elektromagnet 2 und Magnetenaufnahme 5 kann es erlauben, das durch den Elektromagneten 2 erzeugte Magnetfeld derart schwach zu gestalten, dass sich dieses nicht in Teilbereiche der Werkzeugaufnahme 4 erstreckt. Das Magnetfeld kann im Wesentlichen auf unmittelbar an den Elektromagneten 2 angrenzende Teilbereiche der Biegeformen 6 begrenzt werden.

Figur 3 zeigt eine Seitenansicht des Elektromagneten 2 und des Biegewerkzeuges 1 als Teile einer weiteren Ausführungsform der erfindungsgemäßen Vorrichtung zum Positionieren eines Biegewerkzeuges 1 in einer in Figur 2 nicht dargestellten Biegemaschine.

Das Biegewerkzeug 1 umfasst Biegeformen 6, welche zum Umformen eines in Figur 2 nicht dargestellten Werkstückes auf dieses gepresst werden. Die Biegeformen 6 bestimmen unter anderem die Form des gebogenen Werkstückes.

Das Biegewerkzeug 1 wird an einer Werkzeugaufnahme 4 an einem Halteschlitten 3 gehalten. Das Halten des Biegewerkzeuges 1 erfolgt über eine lösbare mechanische Verbindung, wobei die Art der Ausbildung dieser mechanischen Verbindung keinen Einfluss auf die erfindungsgemäße Vorrichtung hat.

Der Halteschlitten 3 ist entlang einer in Figur 2 nicht dargestellten Halteschlittenführung normal zu der Bildebene verschiebbar.

Die Positionierung des Biegewerkzeuges 1 in Richtung normal zu der Bildebene der Figur 2 erfolgt durch ein Verschieben des Elektromagneten 2 in Richtung normal zu der Bildebene der Figur 2, wobei sich zwischen dem Elektromagneten 2 und der Magnetenaufnahme 5 eine Magnetkraft einstellt. Die Magnetenaufnahme 5 ist hierzu aus einem magnetisierbaren Werkstoff hergestellt.

Der Elektromagnet 2 ist als runder Hohlkörper ausgebildet, wobei die Magnetenaufnahme 5 in den inneren Bereich des Hohlkörpers 2 eingebracht wird. Der Elektromagnet 2 und die Magnetenaufnahme 5 weisen - wie im Schnittbild Figur 2 ersichtlich - kongruente, polygonale Formen auf.

Im Besonderen weist die Magnetenaufnahme 5 eine kreisrunde Querschnittsform auf. Der Elektromagnet 2 weist eine ringförmige Querschnittsform als kongruente Form auf.

Figur 4 zeigt die in Figur 1 eingetragene Schnittansicht B-B, wobei in Figur 4 ein zu den in Figur 2 und Figur 3 dargestellten Biegewerkzeugen anderes Biegewerkzeug 1 dargestellt ist. Das Biegewerkzeug 1 umfassend eine Biegeform 6 weist eine Form mit einem zum Halteschlitten 3 exzentrischen Schwerpunkt P auf. Wegen der exzentrischen Position des Schwerpunktes P, an welchem Schwerpunkt P das Eigengewicht P des Biegewerkzeuges 1 wirkt, stellen sich die Kräfte F1, F2, und F3 ein, welche Kräfte F1, F2 und F3 auf die lösbare mechanische Verbindung zwischen Werkzeugaufnahme 4 und Halteschlitten wirken.

Die auf das Biegewerkzeug wirkenden Trägheitskräfte, welche in Figur 4 nicht eingetragen sind, wirken ebenso im Schwerpunkt P.

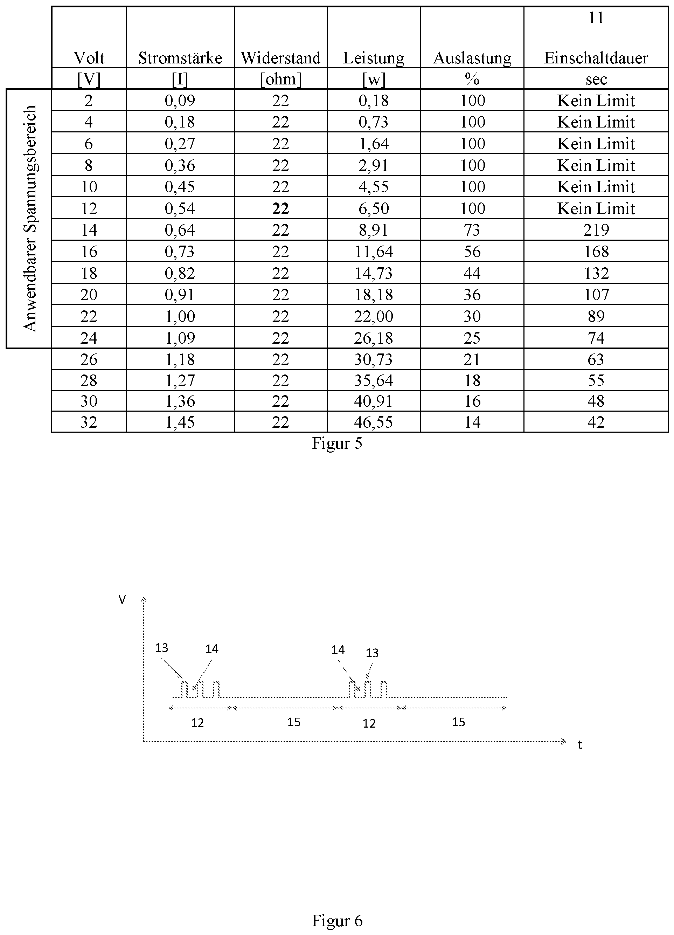

Figur 5 umfasst eine Tabelle, in welcher von links nach rechts in der ersten Spalte die Spannung [V] eingetragen ist, mit welcher der Elektromagnet beaufschlagt wird. In der vierten Spalte ist die erzielbare Leistung [W] eingetragen, welche über eine in Spalte 11 eingetragene Zeitdauer in Sekunden [s] aufrecht gehalten werden kann, um eine Überhitzen des Elektromagneten zu unterbinden. Die in Figur 2 enthaltene Tabelle betrifft einen 12V-Elektromagneten.

Wie aus Figur 2 hervorgeht, kann ein 12V-Elektromagnet nur 74 Sekunden mit 24 Volt und sohin mit einer erhöhten Spannung zur Erzeugung einer erhöhten Magnetkraft beaufschlagt werden.

Figur 6 zeigt symbolhaft ein Diagramm, wobei auf der Abszisse die Zeit t und auf der Ordinate die Spannung V aufgetragen ist, mit welcher Spannung V der Elektromagnet 2 beaufschlagt wird. Es wird ausdrücklich darauf hingewiesen, dass dem Diagramm keine Größen der Spannung und/oder keine Zeitgrößen entnommen werden können.

Es folgt ein Arbeitszyklus 12 auf eine Stehzeit 15. Während des Arbeitszyklus 12 ist der Elektromagnet 2 zumindest teilweise mit einer Spannung beaufschlagt, sodass eine Magnetkraft generiert wird.

Das erfindungsgemäße Verfahren kann - wie in der Figur 6 veranschaulicht - derart ausgeführt werden, dass eine zweite Zeitspanne 14 des Arbeitszyklus 11 auf eine erste Zeitspanne 13 des Arbeitszyklus 11 folgt, wobei in der ersten Zeitspanne 13 der Elektromagnet 2 mit einer ersten Nominalspannung beaufschlagt ist, während der Elektromagnet 2 in der zweiten Zeitspanne 14 mit einer zweiten Nominalspannung beaufschlagt ist. In Figur 6 sind aus Übersichtlichkeitsgründen nur eine erste Zeitspanne 13 und eine zweite Zeitspanne 14 jeweils eines Arbeitszyklus 11 mit einem Bezugszeichen versehen.

Die erste Nominalspannung und die zweite Nominalspannung sind unterschiedlich. Durch die alternierenden Nominalspannungen wird erreicht, dass der Elektromagnet 2 während eines Haltezyklus 11 in Summe für einen kürzeren Zeitraum mit der höheren ersten Nominalspannung beaufschlagt wird als bei einer Beaufschlagung mit einer hohen Nominalspannung über den gesamten Zeitraum des Arbeitszyklus 11. Die durch die alternierende Beaufschlagung mit der ersten Nominalspannung und der zweiten Nominalspannung generierte Magnetkraft bleibt wegen der Trägheit des Elektromagneten 2 im Wesentlichen konstant. Da der Elektromagnet 2 nur über kurze erste Zeiträume 13 mit einer hohen ersten Spannung beaufschlagt wird, kommt es zu keiner Überhitzung des Elektromagneten. Das Problem der Überhitzung des Elektromagneten stellt sich - wie aus der Tabelle in Figur 5 ersichtlich - bei einer Beaufschlagung mit höheren Spannungen als die Nominalspannung.

## Patentansprüche

1. Verfahren zur Positionierung eines Biegewerkzeuges (1) mittels eines Elektromagneten (2),
welches Biegewerkzeug (1) an einer Werkzeugaufnahme (4) von einem entlang einer Halteschlittenführung in eine Bewegungsrichtung verschiebbaren Halteschlitten (3) gehalten wird und welches Biegewerkzeug (1) eine Magnetenaufnahme (5) aus einem magnetisierbaren Werkstoff umfasst,
wobei der Elektromagnet (2) entlang einer Magnetführung verschiebbar ist,
**dadurch gekennzeichnet, dass**
der Elektromagnet (2) und die Magnetenaufnahme (5) ineinander positionierbare, kongruente, polygonale Formen aufweisen und zwischen dem Elektromagnet (2) und der Magnetenaufnahme (5) eine Magnetkraft aufgebracht wird, wobei
der Elektromagnet (2) mit einer Nominalspannung zur Erzeugung einer Nominalkraft als Magnetkraft beaufschlagt wird,
welche Nominalkraft in Abhängigkeit
- des Werkzeuggewichtes (P) und/oder
- der auf das Biegewerkzeug (1) wirkenden Trägheitskräfte und/oder
- der in der Halteschlittenführung wirkenden Reibung und/oder
- der Orientierung der Magnetkraft zu der Bewegungsrichtung und/oder
- der Kontaktflächengröße der Kontaktflächen (7) und/oder
- einer Erstreckung des Magnetfeldes in Bereiche mit weiteren magnetisierbaren Werkstücken durch eine Pulsweitenmodulation oder durch eine Veränderung einer Spannung oder durch eine Veränderung der Stromleistung in Zeitbereichen zur Erzeugung der erforderlichen Magnetkraft erhöht oder reduziert wird.

2. Verfahren nach Anspruch 1, **dadurch gekennzeichnet, dass**
die Nominalkraft stufenweise erhöht oder reduziert wird.

3. Verfahren nach Anspruch 1 oder 2, **dadurch gekennzeichnet, dass**
das Werkzeuggewicht und/oder die Exzentrizität mittels Messvorrichtungen gemessen werden und/oder aus einer Datenbank abgerufen werden und die Magnetkraft in Abhängigkeit der Exzentrizität gewählt wird.

4. Verfahren nach einem der Ansprüche 1 bis 3, **dadurch gekennzeichnet, dass**
die Nominalkraft in Abhängigkeit der Position des Halteschlittens und/oder des zeitlichen Verlaufes erhöht oder reduziert wird.

5. Verfahren nach einem der Ansprüche 1 bis 4, **dadurch gekennzeichnet, dass**
das Werkzeug (1) teilweise entmagnetisiert wird.

6. Verfahren nach Anspruch 5, **dadurch gekennzeichnet, dass**
das Werkzeug (1) in Abhängigkeit der temporären Position des Haltschlittens (3) beziehungsweise des Werkzeuges (1) teilweise entmagnetisiert wird.

7. Verfahren nach Anspruch 6, **dadurch gekennzeichnet, dass**
das Werkzeug (1) vor und/oder während und/oder nach der Abgabe des Werkzeuges (1) zumindest teilweise entmagnetisiert wird.

8. Verfahren nach einem der Ansprüche 6 bis 7, **dadurch gekennzeichnet, dass**
die Entmagnetisierungsparameter in Abhängigkeit der Bewegung des Werkzeuges (1) und/oder der Bewegungsgeschwindigkeit des Werkzeuges (1) gewählt werden.

9. Verfahren nach einem der Ansprüche 6 bis 8, **dadurch gekennzeichnet, dass** die Entmagnetisierungsparameter aus einer Datenbank geladen werden.

## Claims

1. A method for positioning a bending tool (1) by means of an electromagnet (2) which bending tool (1) is held on a tool holder (4) by a retaining carriage (3) that can be displaced in a direction of movement along a retaining-carriage guide and which bending tool (1) comprises a magnet holder (5) of a magnetizable material,
wherein the electromagnet (2) can be displaced along a magnetic guide,
**characterized in that**
the electromagnet (2) and the magnet holder (5) have congruent, polygonal shapes which can be positioned into one another and a magnetic force is applied between the electromagnet (2) and the magnet holder (5), wherein
the electromagnet (2) is energized with a nominal voltage for generation of a nominal force as magnetic force,
which nominal force, dependent on
- the tool weight (P) and/or
- the inertial forces acting on the bending tool (1) and/or
- the friction acting in the retaining-carriage guide and/or
- the orientation of the magnetic force relative to the movement direction and/or
- the size of the contact area of the contact faces (7) and/or
- an extension of the magnetic field into regions having further magnetizable workpieces
is increased or decreased by a pulse width modulation or by a change of a voltage or by a change of the current capacity in time spans for generation of the necessary magnetic force.

2. The method according to claim 1, **characterized in that** the nominal force is increased or decreased gradually.

3. The method according to claim 1 or 2, **characterized in that** the tool weight and/or the eccentricity are measured by means of measuring devices and/or are retrieved from a database, and the magnetic force is adjusted dependent on the eccentricity.

4. The method according to one of claims 1 to 3, **characterized in that** the nominal force is increased or decreased dependent on the position of the retaining carriage and/or on the time progression.

5. The method according to one of claims 1 to 4, **characterized in that** the tool (1) is partly demagnetized.

6. The method according to claim 5, **characterized in that** the tool (1) is partly demagnetized dependent on the temporary position of the retaining carriage (3) and/or of the tool (1).

7. The method according to claim 6, **characterized in that** the tool (1) is at least partly demagnetized before and/or during and/or after the discharge of the tool (1).

8. The method according to one of claims 6 to 7, **characterized in that** the demagnetization parameters are selected dependent on the movement of the tool (1) and/or of the movement speed of the tool (1).

9. The method according to one of claims 6 to 8, **characterized in that** the demagnetization parameters are loaded from a database.

## Revendications

1. Procédé destiné au positionnement d'un outil de pliage (1) au moyen d'un électroaimant (2),
lequel outil de pliage (1) est retenu sur un logement d'outil (4) par un chariot de retenue (3) pouvant coulisser de long d'un guide de chariot de retenue dans une direction de déplacement, et lequel outil de pliage (1) comprend un logement d'aimant (5) en matériau magnétisable,
l'électroaimant (2) pouvant coulisser de long d'un guide d'aimant,
**caractérisé en ce que**
l'électroaimant (2) et le logement d'aimant (5) comportent des formes polygonales, congruentes pouvant être positionnées les unes dans les autres, et **en ce qu'**une force magnétique est appliquée entre l'électroaimant (2) et le logement d'aimant (5), l'électroaimant (2) étant exposé à une tension nominale destinée à produire une force nominale en tant que force magnétique,
laquelle force magnétique, en fonction
- du poids de l'outil (P) et/ou
- des forces d'inertie agissant sur l'outil de pliage (1) et/ou
- du frottement agissant dans le guide de chariot de retenue et/ou
- de l'orientation de la force magnétique par rapport à la direction de déplacement et/ou
- de la grandeur de la surface de contact des surfaces de contact (7) et/ou
- d'une étendue du champ magnétique dans des zones ayant d'autres pièces magnétisables,
est augmentée ou réduite par une modulation de largeur d'impulsion ou par une variation d'une tension ou par une variation de la puissance électrique dans des plages temporelles pour la production de la force magnétique nécessaire.

2. Procédé selon la revendication 1, **caractérisé en ce que** la force nominale est augmentée ou réduite progressivement.

3. Procédé selon la revendication 1 ou 2, **caractérisé en ce que** le poids de l'outil et/ou l'excentricité sont mesurés au moyen de dispositifs de mesure et/ou peuvent être appelés à partir d'une base de données, et la force magnétique est choisie en fonction de l'excentricité.

4. Procédé selon l'une des revendications 1 à 3, **caractérisé en ce que** la force nominale est augmentée ou réduite en fonction de la position du chariot de retenue et/ou de l'évolution dans le temps.

5. Procédé selon l'une des revendications 1 à 4, **caractérisé en ce que** l'outil (1) est partiellement démagnétisé.

6. Procédé selon la revendication 5, **caractérisé en ce que** l'outil (1) est partiellement démagnétisé en fonction de la position temporaire du chariot de retenue (3) ou respectivement de l'outil (1).

7. Procédé selon la revendication 6, **caractérisé en ce que** l'outil (1) est au moins partiellement démagnétisé avant et/ou pendant et/ou après la remise de l'outil (1).

8. Procédé selon l'une des revendications 6 à 7, **caractérisé en ce que** les paramètres de démagnétisation sont choisis en fonction du déplacement de l'outil (1) et/ou de la vitesse de déplacement de l'outil (1).

9. Procédé selon l'une des revendications 6 à 8, **caractérisé en ce que** les paramètres de démagnétisation sont chargés à partir d'une base de données.
